(19) **Europäisches Patentamt**

**European Patent Office**

**Office européen des brevets**

(11) **EP 1 431 640 B1**

(12) **EUROPÄISCHE PATENTSCHRIFT**

(45) Veröffentlichungstag und Bekanntmachung des Hinweises auf die Patenterteilung:
**04.01.2006 Patentblatt 2006/01**

(51) Int Cl.:
**F16K 31/40** (2006.01)

(21) Anmeldenummer: **03027218.1**

(22) Anmeldetag: **28.11.2003**

(54) **Ventileinrichtung mit einem elektromotorisch ansteuerbaren Servoventil**

Valve arrangement with an electric motor controlled pilot valve

Dispositif de soupape avec une servovanne controlée par un moteur électrique

(84) Benannte Vertragsstaaten:
**AT BE BG CH CY CZ DE DK EE ES FI FR GB GR HU IE IT LI LU MC NL PT RO SE SI SK TR**

(30) Priorität: **19.12.2002 DE 10259582**

(43) Veröffentlichungstag der Anmeldung:
**23.06.2004 Patentblatt 2004/26**

(73) Patentinhaber: **A. und K. Müller GmbH & Co. KG**
**40595 Düsseldorf (DE)**

(72) Erfinder:
• **Schön, Hartmut Ludwig**
**51061 Köln (DE)**
• **Berger, Gerd**
**40593 Düsseldorf (DE)**
• **Glaus, Uwe**
**40593 Düsseldorf (DE)**

(74) Vertreter: **Feder, Wolf-Dietrich**
**Dr. Wolf-D. Feder, Dr. Heinz Feder**
**Dipl.-Ing. P.-C. Sroka**
**Dominikanerstrasse 37**
**40545 Düsseldorf (DE)**

(56) Entgegenhaltungen:
DE-B- 1 231 987     DE-U- 20 000 165
US-A- 4 995 585

• **PATENT ABSTRACTS OF JAPAN vol. 006, no. 224 (M-170), 9. November 1982 (1982-11-09) & JP 57 127174 A (SHIROMICHI OGAWA), 7. August 1982 (1982-08-07)**

EP 1 431 640 B1

## Beschreibung

Die Erfindung betrifft eine Ventileinrichtung mit einem elektromotorisch ansteuerbaren Servoventil mit den Merkmalen aus dem Oberbegriff des Patentanspruchs 1.

Ein derartiges Ventil ist beispielsweise in US-A-4 995 585 beschrieben.

Bekannte Servoventile arbeiten bei einer unabhängig von der Ventilstellung konstant gehaltenen Druckdifferenz einwandfrei als Proportionalventil. In der Praxis tritt aber häufig der Fall auf, daß Strömungswiderstände (Armaturen, Kühler, Durchlauferhitzer, Rohrleitungen und dgl.) in Reihe zum Ventil geschaltet sind, welche den maximal möglichen Durchfluss begrenzen. Dies führt dazu, daß sich bei voll geöffnetem Ventil ein Durchfluß einstellt, der weit unter dem ventilseitig maximal möglichen Durchfluß liegt und dadurch die Druckdifferenz über dem Ventil sehr stark absinkt. Die Druckdifferenz wird also bei geöffnetem Ventil geringer, so daß der Durchfluß nicht mehr proportional zur Ventilstellung, also linear zum Spindelhub, ansteigt und bei voll geöffnetem Ventil nur noch von den in Reihe geschalteten Strömungswiderständen abhängt.

Der Erfindung liegt die Aufgabe zugrunde, ein elektromotorisch ansteuerbares Servoventil mit den Merkmalen aus dem Oberbegriff des Patentanspruchs 1 so auszugestalten, daß, auch wenn das Ventil in Reihe mit Strömungswiderständen betrieben wird, eine nahezu lineare Durchfluß-Hub-Kennlinie erreichbar ist.

Die Lösung dieser Aufgabe geschieht erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Der Grundgedanke der Erfindung besteht darin, das die Entlastungsbohrung des bekannten Servoventils öffnende und verschließende Steuerorgan, als Verschlusskörper mit vorgegebener, konvex gekrümmter Mantelfläche auszubildem. Wie weiter unten anhand eines Ausführungsbeispiels erläutert, hat dies zur Folge, daß bis zu einem vorgegebenen Hubbereich, der 25 - 35 % des Gesamthubs betragen kann, ausschließlich der direkt wirkende Ventilteil arbeitet und bei Überschreitung dieses Hubbereiches praktisch übergangslos und für den Anwender unmerklich der Ventilteller des Servoteils öffnet. Man kann dies auch so ausdrücken, daß bei dem Servoventil eine dynamisch arbeitende Entlastungsbohrung vorhanden ist, die, bezogen auf die Druckdifferenz, das Einsetzen des Servoprinzips steuert. Das Servoprinzip selbst kann dann im Prinzip so ausgebildet sein, wie in DE 200 00 165 U1 beschrieben.

Es hat sich gezeigt, daß, wenn die erfindungsgemäße Ventileinrichtung in dieser Weise mit Strömungswiderständen betrieben wird, eine in Abhängigkeit vom Reihenwiderstand nahezu lineare Durchfluß-Hub-Kennlinie erzielt werden kann.

Im folgenden wird anhand der beigefügten Zeichnungen ein Ausführungsbeispiel für das erfindungsgemäße Ventil und seine Funktionsweise näher erläutert.

In den Zeichnungen zeigen

Fig. 1 einen Axialschnitt durch das Servoventil in der geschlossenen Stellung;

Fig. 1A den Bereich X1 aus Fig. 1 in vergrößerter Darstellung;

Fig. 2 in einem Axialschnitt analog Fig. 1 das Servoventil in einer ersten Öffnungsstellung bei geöffneter Entlastungsbohrung, aber geschlossenem Ventilteller;

Fig. 2A den Bereich X2 aus Fig. 2 in vergrößerter Darstellung;

Fig. 3 in einer Darstellung analog Fig. 1 und 2 das Servoventil in einer zweiten Öffnungsstellung bei geöffneter Entlastungsbohrung und geöffnetem Ventilteller;

Fig. 3A den Bereich X3 in Fig. 3 in vergrößerter Darstellung;

Fig. 4 in einer Darstellung analog den Fig. 1 bis 3 das Servoventil in einer dritten Öffnungsstellung bei geöffneter Entlastungsbohrung und voll geöffnetem Ventilteller;

Fig. 4A den Bereich X4 in Fig. 4 in vergrößerter Darstellung;

Fig. 5 den Differentialkolben und Ventilteller des Servoventils nach Fig. 1 bis 4 im Axialschnitt nach der Linie A-A in Fig. 6;

Fig. 6 den Differentialkolben nach Fig. 5 in einer Draufsicht;

Fig. 7 den Differentialkolben nach Fig. 5 und 6 im Schnitt nach der Linie B-B in Fig. 6;

Fig. 8 den Differentialkolben nach Fig. 5 bis 7 in einer isometrischen Darstellung;

Fig. 9 ein Durchflußdiagramm in Form der Durchfluß/Hub-Kennlinie des Servoventils nach Fig. 1 bis 8 im Vergleich zur Kennlinie eines bekannten Servoventils.

Fig. 10 in einer Kurvendarstellung den Verlauf der Regelkontur des am Differenzialkolben angeordneten Regelkörpers und die Kontur der Mantelfläche des Verschlußkörpers bei dem Servoventil nach Fig. 1 bis 8.

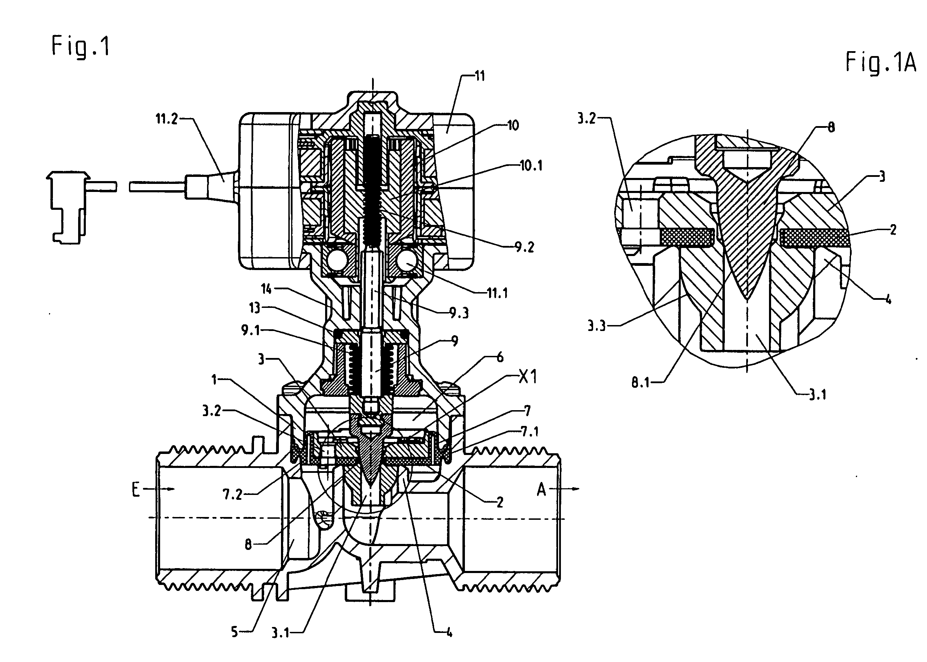

Das in den Fig. 1 bis 8 insgesamt dargestellte Servoventil ist Teil einer Ventileinrichtung, bei der dem Servoventil in nicht dargestellter Weise ein Strömungswiderstand in Reihe geschaltet ist. Zur Dimensionierung des Servoventils in bezug auf den Strömungswiderstand werden weiter unten Erläuterungen gegeben. Zunächst wird das Servoventil als solches beschrieben.

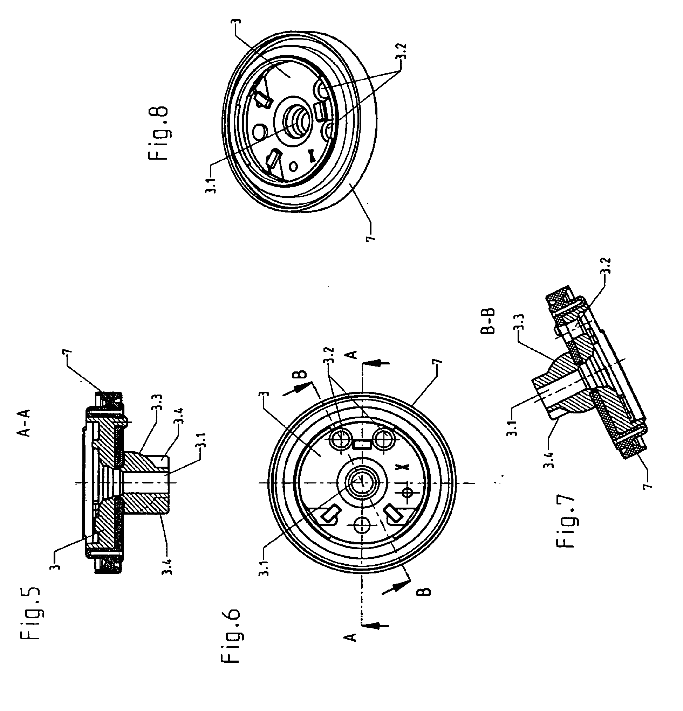

Das Servoventil besitzt ein Ventilgehäuse 1, an dem ein Ventileinlaß E und ein Ventilauslaß A angeordnet sind. Im Ventilgehäuse 1 ist ein Differentialkolben 3 verschiebbar angeordnet, der einen Ventilteller 2 trägt, der einem Ventilsitz 4 gegenüberliegt. Der Ventilteller 2 ist einstückig in eine Rollmembran 7 integriert, deren äußerer Rand 7.1 dichtend mit dem Ventilgehäuse 1 verbunden ist, während ihr innerer Rand 7.2 mit dem Ventilteller 2 und damit dem Differentialkolben 3 verbunden ist. Die Rollmembran 7 trennt einen an der einen Seite des Differentialkolbens 3 angeordneten Druckraum 5, der mit dem Ventileinlaß E verbunden ist, von einem an der anderen Seite des Differentialkolbens 3 angeordneten Steuerraum 6, der über eine mittig im Differentialkolben angeordnete Entlastungsbohrung 3.1 mit dem Ventilauslaß A und über einen Steuerkanal, der als außermittig im Differentialkolben 3 angeordnete Steuerbohrung 3.2 ausgebildet ist, mit dem Druckraum 5 verbunden ist. Der Druckraum 5 ist bei geöffnetem Ventil über den Ventilsitz 4 mit dem Ventilauslaß A verbunden. Die Rollmembran 7 ist so ausgebildet, daß der Ventilteller 2 kraftlos auf dem Ventilsitz 4 aufliegt. Der Differentialkolben 3 ragt mit einem Regelkörper 3.3 in den Ventilsitz 4 hinein, wobei der Regelkörper durch Führungsstege 3.4 (Fig. 5 u. 7) am Ventilsitz 4 geführt ist.

Innerhalb des Steuerraums 6 ist der Entlastungsbohrung 3.1 gegenüberliegend ein Steuerorgan angeordnet, das als in die Entlastungsbohrung 3.1 eintauchender, eine vorgegebene, konvex gekrümmte und sich in Schließrichtung verjüngende Mantelfläche 8.1 aufweisender Verschlußkörper 8 ausgebildet ist. Der Verschlußkörper wird formschlüssig von einer Steuerstange 9 gehalten, die unter Abdichtung durch einen Faltenbalg 9.1 in den Steuerraum 6 hineingeführt ist. Diese Steuerstange 9 ist in axialer Richtung verschiebbar, und ihr mittlerer Abschnitt ist in einer Vierkantführung 9.3 geführt, während der äußere Abschnitt ein Außengewinde 9.2 aufweist. Durch die Vierkantführung 9.3 ist die Steuerstange 9 verschiebbar, aber unverdrehbar aus dem Steuerraum 6 und dem Ventilgehäuse 1 herausgeführt. Am Ventilgehäuse 1 ist über ein Adapterstück 14 ein Schrittmotor 11 befestigt. Die Abtriebswelle 10 des Schrittmotors 11 verläuft koaxial zur Steuerstange 9 und trägt eine Gewindemutter 10.1, in die das äußere, mit dem Außengewinde 9.2 versehene Ende der Steuerstange 9 hineingeführt ist. Dieses einfach ausgebildete Schraubgetriebe bewirkt, daß bei jeder Drehung der Gewindemutter 10.1 um einen vorgegebenen Winkelbetrag die Steuerstange 9 je nach Drehrichtung der Abtriebswelle 10 eine Bewegung in Schließrichtung oder in Öffnungsrichtung des Verschlußkörpers 8 ausführt.

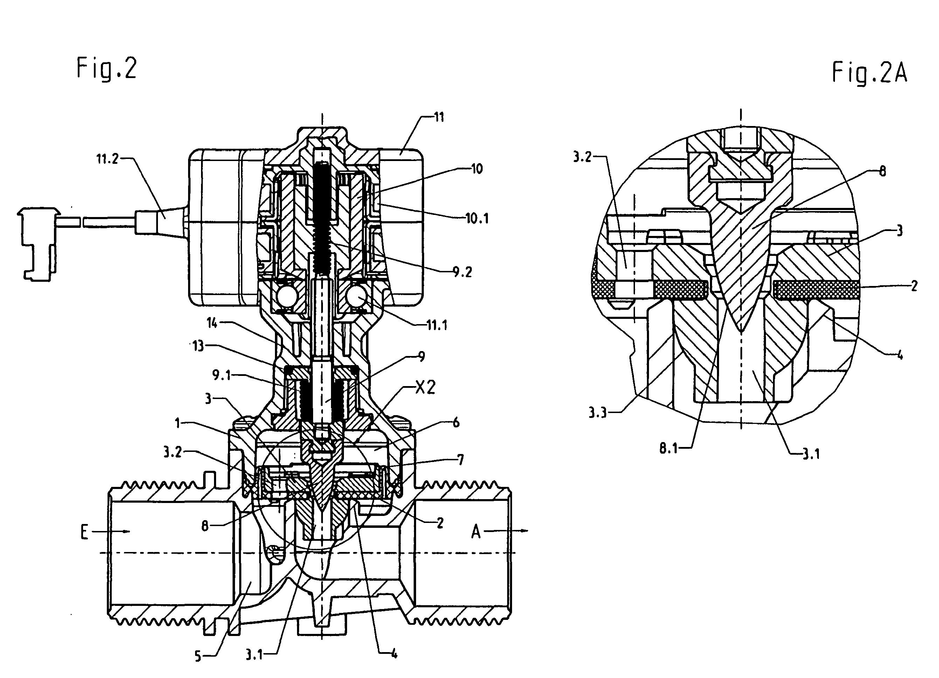

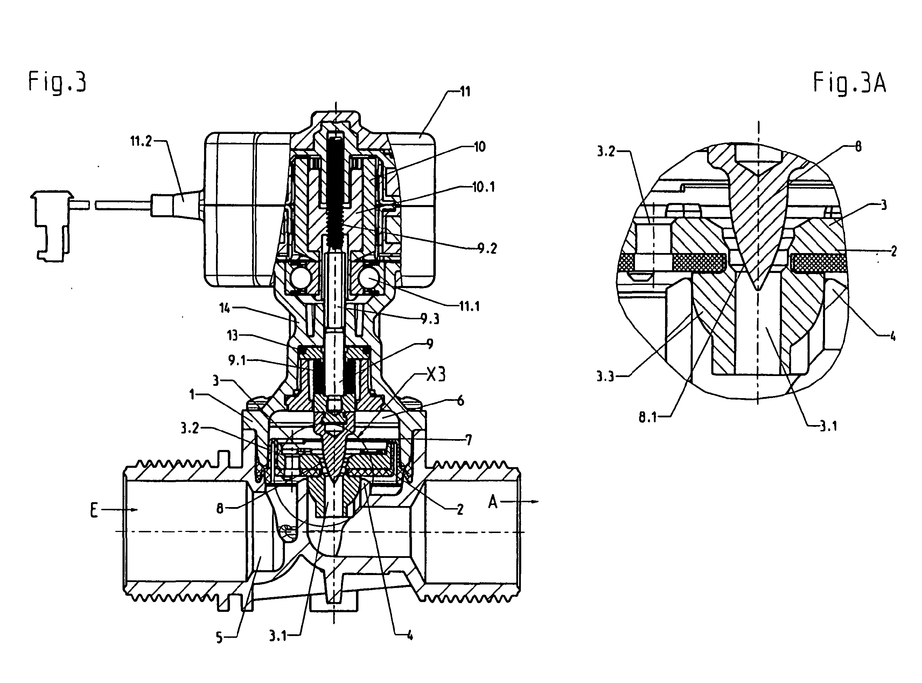

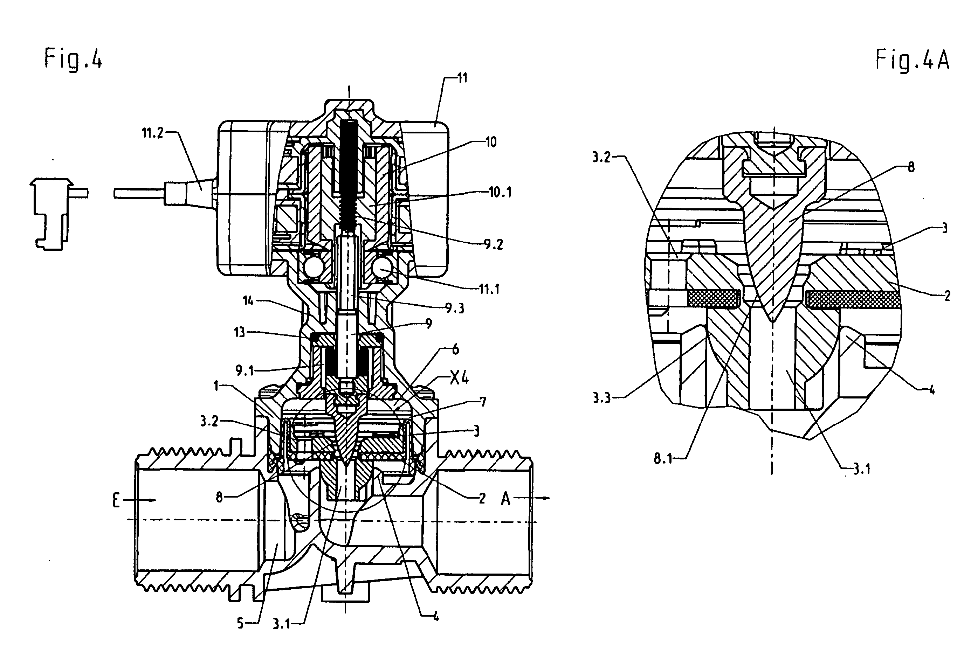

Anstelle des Faltenbalgs 9.1 kann auch eine Rollmembran verwendet werden und anstelle des Schrittmotors 11 kann ein Gleichstrommotor mit Inkrementalgeber treten. Um einen besonders leichten und präzisen Lauf der Abtriebswelle 10 des Schrittmotors 11 zu erreichen, ist diese in einem Kugellager 11.1 gelagert. Die Fig. 1 und 1 A zeigen das Ventil in der Geschlossstellung, in welcher der Verschlußkörper 8 so weit in die Entlastungsbohrung 3.1 eintaucht, daß diese durch die Mantelfläche 8.1 des Verschlußkörpers 8 vollständig dichtend verschlossen ist. Fig. 2A zeigt den Verschlußkörper 8 in einer ersten, leicht angehobenen Öffnungsstellung, in welcher der Durchtrittsquerschnitt der Entlastungsbohrung 3.1 bereits teilweise freigegeben ist. Die weiter unten näher erläuterte Kontur der Mantelfläche 8.1 ist dabei so gewählt, daß im unteren Hubbereich der freigegebene Querschnitt der Entlastungsbohrung 3.1 sehr viel kleiner ist als der Querschnitt der Steuerbohrung 3.2. Dies hat zur Folge, daß die Differenz zwischen dem Druck im Druckraum 5 und im Steuerraum 6 nicht ausreicht, um den Differentialkolben 3 und damit den Ventilteller 2 vom Ventilsitz 4 abzuheben. Das Servoventil bleibt geschlossen und das Medium strömt mit einem Durchfluß von 20% über die Steuerbohrung 3.2 und die Entlastungsbohrung 3.1 zum Ventilauslaß A, wobei durch die Ausbildung der Mantelfläche 8.1 erreicht wird, daß bei diesem aus dem Verschlußkörper 8 und der Entlastungsbohrung 3.1 bestehenden, direkt wirkenden Ventil eine nahezu lineare Durchfluß/ Hub-Kennlinie erreicht wird. Wenn sich der Verschlußkörper 8 weiter anhebt, erreicht die Entlastungsbohrung 3.1 einen Öffnungsquerschnitt, bei dem die Druckdifferenz über der Steuerbohrung 3.2 hinreichend angestiegen ist und, wie beispielsweise Fig. 3 und 3A zu entnehmen, hebt der Differentialkolben 3 und damit der Ventilteller 2 vom Ventilsitz 4 ab. Der Durchfluß beträgt jetzt 60%. Wenn schließlich der Verschlußkörper 8 seine größte Öffnungsstellung erreicht hat, ist auch der Ventilteller 2 in die Maximalstellung angehoben, wie in Fig. 4 und 4A dargestellt, und damit das Servoventil voll mit einem Durchfluß von 100% geöffnet. Der am Differentialkolben 3 angeordnete Regelkörper 3.3 besitzt eine errechnete Regelkontur, die zu einer linearen Kennlinie bei der Ventilverstellung des Servoventils führt. Die Bestimmungen dieser Regelkontur sowie der Mantelfläche 8.1 des Verschlußkörpers 8 werden weiter unten erläutert. Der Schrittmotor 11 wird über seinen Eingang 11.2 von einer nicht dargestellten Steuereinrichtung aus mit elektrischen Steuerimpulsen angesteuert.

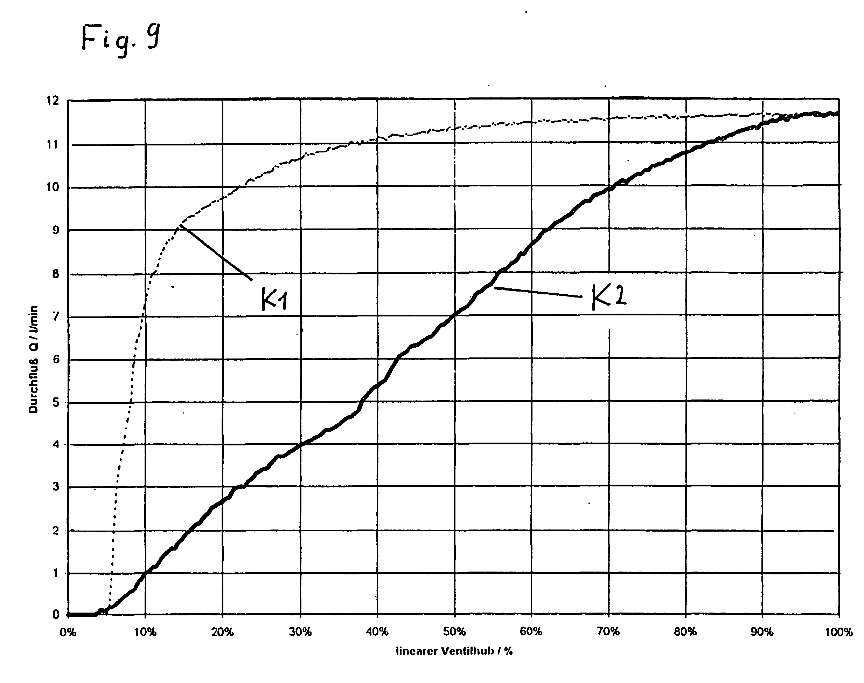

Fig. 9 zeigt in einem beispielhaften Diagramm, in dem der Durchfluß in l/min gegen den Hub in % aufgetragen ist, zwei Kennlinien K1 und K2 einer Reihenschaltung eines Servoventils mit einem Strömungswiderstand. Die Kennlinie K1 ist mit einem Servoventil üblicher Bauart aufgenommen, wie es in etwa dem Oberbegriff des Patentanspruchs 1 entspricht. Man erkennt, daß bereits bei ca. 14 % des auf der X-Achse eingetragenen Hubs 70 % des maximal möglichen Durchflusses durch das Ventil fließen mit der Konsequenz, daß eine Regelung in diesem Durchflußbereich praktisch unmöglich ist. Das Ventil schlägt fast zwangsläufig bei geringer Hubreduzierung zu. Andererseits fließen bei 50 % Hub bereits 95 % des maximal möglichen Durchflusses.

Die Kurve K2 zeigt die Kennlinie eines Servoventils, wie es oben anhand der Fig. 1 bis 8 beschrieben wurde. Es zeigt sich, daß eine nahezu lineare, über weite Bereiche gleichmäßig ansteigende Kennlinie erzielt ist.

Zur Dimensionierung und Funktionsweise der oben beschriebenen Ventileinrichtung wird nachstehend noch folgendes erläutert.

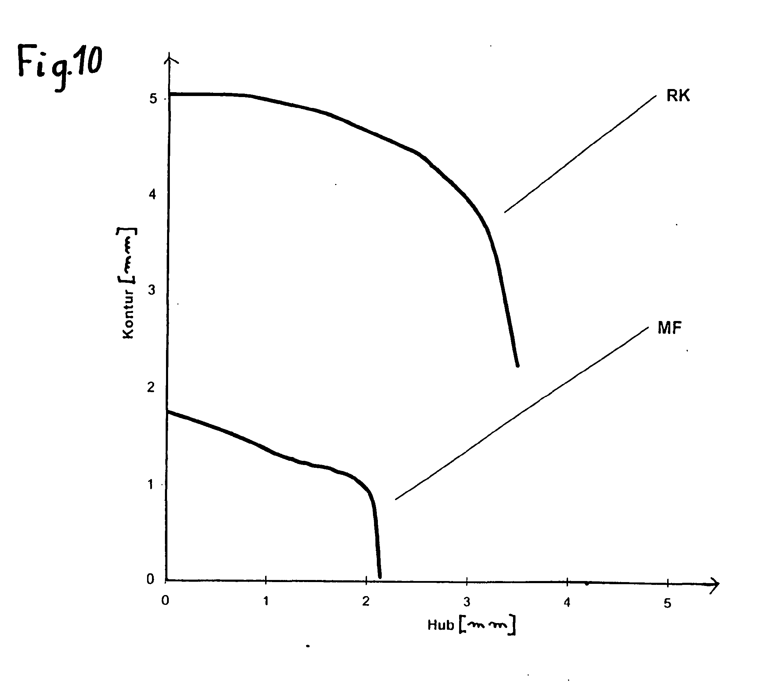

Ein sehr wesentliches Merkmal der beschriebenen Ventileinrichtung ist die Tatsache, daß dem Servoventil ein Strömungswiderstand in Reihe geschaltet sein soll. Die annähernd lineare Kennlinie der Ventileinrichtung bezieht sich also immer darauf, daß eine Reihenschaltung zwischen Ventil und Strömungswiderstand vorliegt. Der Strömungswiderstand wird im folgenden mit seinem Kv-Wert (das ist der Volumendurchflußwert bei 1 bar) charakterisiert. Es hat sich dabei als vorteilhaft erwiesen, wenn dieser Strömungswiderstand einen Kv-Wert von mindestens 7 % des Kv-Wertes des vollgeöffneten Gesamtventils aufweist. Bei dem Ausführungsbeispiel nach Fig. 9 und den in Fig. 10 dargestellten Konturen wurde von einem besonders vorteilhaften Kv-Wert des Strömungswiderstandes von im Beispiel 38 % des Kv-Wertes des vollgeöffneten Gesamtventils ausgegangen.

Wenn aus technischen Gründen nicht der jeweils vorteilhafteste Kv-Wert des Strömungswiderstandes gewählt werden kann, ist es, um eine vollständige Öffnung des Servoventils zu erreichen, zweckmässig, den Hub des Differenzialkolbens 3 mit dem Ventilteller 2 durch eine Hubbegrenzung auf einen Maximalwert zu begrenzen. Eine solche Hubbegrenzung ist in Fig. 1 bis 4 nicht eigens dargestellt. Sie kann beispielsweise darin bestehen, daß sich der Differenzialkolben 3 beispielsweise in der in Fig. 4 und 4A dargestellten maximalen Öffnungsstellung mit seiner Oberseite oder einem an dieser Oberseite angeordneten Kragen an einen Anschlag oder eine Schulter innerhalb des Steuerraums 6 anlegt.

Durch die vorgegebene Ausgestaltung der Konturen der Mantelfläche 8.1 des Verschlußkörpers sowie der Regelkontur des Regelkörpers 3.3 in Verbindung mit dem Öffnungspunkt des Ventiltellers 2, der vom Durchmesser der Steuerbohrung 3.2 abhängt, sowie dem Größenverhältnis der Nennweiten von Direktventil zu Servoventil ist die Durchfluß-Hub-Kennlinie so abstimmbar, daß eine gewünschte Kennlinie erzeugt wird.

Das direktwirkende Pilotventil ermöglicht einen fein abgestuften unteren Durchflußbereich. Dies führt zur Spreizung der Durchfluß-Hub-Kennlinie und zur Erhöhung der Reproduzierbarkeit, weil das direktwirkende Ventil hysteresefrei arbeitet. Das Medium strömt zunächst durch die Steuerbohrung 3.2 dem direktwirkenden Ventil zu. Bei kleiner Öffnung ist der Druckverlust über der Steuerbohrung vernachlässigbar (Der Ventilteller 2 kann noch nicht öffnen). Bei weiterer Öffnung des direktwirkenden Ventils, also des Verschlußkörpers 8, verkleinert sich der Druckverlust über dem direktwirkenden Ventil, wodurch der anteilige Druckverlust über der Steuerbohrung 3.2 ansteigt und für das Abheben des Ventiltellers 2 vom Ventilsitz 4 sorgt. Durch die dynamische Entlastungsbohrung 3.1 kann der Servoteil des Ventils bei kleinerer Druckdifferenz öffnen als bei einem herkömmlichen Servoventil. Für ein besonders vorteilhaftes Ausführungsbeispiel der beschriebenen Ventileinrichtung wurden die Konturen des Regelkörpers 3.3 sowie der Mantelfläche 8.1 des Verschlußkörpers 8 aus im folgenden zusammengestellten Vorgabegrößen berechnet. Die Ergebnisse sind in Fig. 10 in der Weise dargestellt, daß die Kontur des Regelkörpers 3.3 als Kurve RK dargestellt ist, welche jeweils den Radius in mm in Abhängigkeit vom Hub in mm angibt. In der gleichen Figur ist als Kurve MF die Kontur der Mantelfläche 8.1 des Verschlußkörpers 8 angegeben.

Ausgelegt wurde beispielhaft bei einem Mediumsdruck p = 4,0 bar. Die Kv-Werte bei Vollöffnung ergaben sich aus der Geometrie und der Anschlußgeometrie des Ventils. Im Ausführungsbeispiel wurden für das Gesamtventil $Kv_V$ = 26 l/min und für den Direktteil $Kv_{Direkt}$ = 4,5 l/min zugrunde gelegt. Der Kv-Wert des Strömungswiderstandes wurde auf $Kv_R$ = 38 % des Kv-Wertes $Kv_{VMAX}$ des vollgeöffneten Ventils festgelegt. Die Nennweite des direktwirkenden Ventils betrug 39 % der Nennweite des Gesamtventils.

Auslegungsziel war eine Proportionalität zwischen dem Hub des Verschlußkörpers 8 und dem Durchfluß im gesamten Bereich 0 ... 100 %.

Die zu ermittelnden Konturen wurden in folgenden Teilbereichen berechnet:

I. - Ventilteller geschlossen. Gesamter Durchfluß fließt durch den teilgeöffneten, direktwirkenden Ventilteil;

II. - Ventilteller und Verschlußkörper teilgeöffnet und Ventilteller im statischen Kräftegleichgewicht. Dynamische Druckkomponenten konnten in guter Näherung vernachlässigt werden.

Es ergaben sich für die beiden o.g. Teilbereiche I und II folgende Formeln für die Strömungsquerschnitte $A_{IDirekt}$, $A_{IServo}$, $A_{IIDirekt}$ und $A_{IIServo}$ in der Einheit mm², aus denen sich die Radienverläufe ergeben, wie sie in Fig. 10 mit den Kurven RK und MF dargestellt sind. Für das Finden der Konturen ist der engste Querschnitt beim Einströmen in den jeweiligen Ventilsitz maßgeblich. Da hier sehr stark die Geometrie des Ventils einfließt, werden im folgenden nur die Formeln zur Berechnung der oben erwähnten Querschnittsflächen angegeben.

$$A_{IDirekt} = \frac{A_{Direkt\,max} / Kv_{Direkt\,max}}{\sqrt{\dfrac{1}{Kv^2_{V\,max}} \dfrac{1}{Q^2_{rel}} - \dfrac{1}{Kv^2_{AB}} + \dfrac{1}{Kv^2_R}\left(\dfrac{1}{Q^2_{rel}} - 1\right)}}$$

$$A_{IServo} = 0$$

$$A_{IIDirekt} = \frac{A_{Direkt\,max}\sqrt{\Delta p_{IIAB}}\,Kv_{AB} / Kv_{Direkt\,max}}{\sqrt{p - \Delta p_{IIAB} - \dfrac{Q^2_{V\,max}}{Kv^2_R}Q^2_{rel}}}$$

$$A_{IIServo} = \frac{A_{Servo\,max}\left(Q_{V\,max}Q_{rel} - \sqrt{\Delta p_{IIAB}}\,Kv_{AB}\right)}{\left(Kv_{V\,max} - \dfrac{1}{\sqrt{\dfrac{1}{Kv^2_{AB}} + \dfrac{1}{Kv^2_{Direkt\,max}}}}\right)\sqrt{p - \dfrac{Q^2_{V\,max}}{Kv^2_R}Q^2_{rel}}}$$

In den oben angegebenen Formeln wurden folgende Bezeichnungen verwendet:

$A_{Direkt\,max\,(mm2)}:$ Querschnittsfläche des vollgeöffneten, direktwirkenden Ventilteils

$A_{Servo\,max\,(mm2)}:$ Querschnittsfläche des vollgeöffneten Servoteils

$Kv_{Direkt\,max\,(l/min)}:$ Kv-Wert des vollgeöffneten, direktwirkenden Ventilteils

$Kv_{Vmax\,(l/min)}:$ Kv-Wert des vollgeöffneten Gesamtventils

$Kv_{AB\,(l/min)}:$ Kv-Wert der Steuerbohrung 3.2

$Kv_{R\,(l/min)}:$ Kv-Wert des dem Servoventil in Reihe geschalteten Strömungswiderstandes

$Q_{rel\,(\%)}:$ Punktueller Durchflußwert bezogen auf den maximal erreichbaren Durchfluß

$Q_{vmax\,(l/min)}:$ Maximal erreichbarer Durchfluß

p *(bar):*          Druckdifferenz über der Reihenschaltung aus Gesamtventil und Strömungswiderstand

$\Delta p_{IIAB}$ *(bar):*       Druckdifferenz über dem Ventilteller 2 (bzw. über der Steuerbohrung 3.2) im statischen Kräftegleichgewicht.

## Patentansprüche

**1.** Ventileinrichtung mit einem elektromotorisch ansteuerbaren Servoventil, das einen in einem Ventilgehäuse (1) verschiebbar angeordneten, den Ventilteller (2) tragenden Differentialkolben (3) aufweist, an dessen einer Seite ein mit dem Ventileinlaß verbundener Druckraum (5) angeordnet ist, der über einen dem Ventilteller gegenüberliegenden Ventilsitz (4) mit dem Ventilauslaß (A) verbunden ist, und an dessen anderer Seite ein Steuerraum (6) angeordnet ist, der über eine im Differentialkolben angeordnete Entlastungsbohrung (3.1) mit dem Ventilauslaß und über einen Steuerkanal mit dem Druckraum (5) verbunden ist, wobei der Druckraum (5) gegen den Steuerraum (6) im Randbereich des Differentialkolbens abgedichtet ist und die Entlastungsbohrung (3.1) steuerraumseitig durch ein Steuerorgan verschließbar ist, welches mit einer motorisch verschiebbaren, aus dem Steuerraum dichtend herausgeführten Steuerstange (9) verbunden ist, und daß dem Servoventil ein Strömungswiderstand in Reihe geschaltet ist und das Steuerorgan als in die Entlastungsbohrung (3.1) eintauchender, eine vorgegebene, sich in Schließrichtung verjüngende Mantelfläche (8.1) aufweisender Verschlußkörper (8) ausgebildet ist, der aus einer Schließstellung, in welcher er die Entlastungsbohrung (3.1) dichtend verschließt, in eine Öffnungsstellung bewegbar ist, wobei sich in den Zwischenstellungen zwischen der Schließstellung und der Öffnungsstellung der Durchtrittsquerschnitt der Entlastungsbohrung (3.1) sukzessive vergrößert und die Mantelfläche (8.1) des Verschlußkörpers (8) derart ausgestaltet ist, daß bei einer vorgegebenen Zwischenstellung des Verschlußkörpers (8) der Differentialkolben (3) mit dem Ventilteller (2) unter dem Differenzdruck des strömenden Mediums vom Ventilsitz (4) abhebt, **dadurch gekennzeichnet, dass** der Verschlusskörper (8) eine vorgegebene, konvex gekrümmte Mantelfläche (8.1) aufweist.

**2.** Ventileinrichtung nach Anspruch 1, **dadurch gekennzeichnet, daß** die Kontur der Mantelfläche (8.1) des Verschlußkörpers (8) derart ausgestaltet ist, daß bei seiner Öffnungsbewegung mindestens bis zum Erreichen der Zwischenstellung, in welcher der Differentialkolben (3) abhebt, der Durchfluß dem Hub des Verschlußkörpers (8) proportional ist.

**3.** Ventileinrichtung nach Anspruch 1 oder 2, **dadurch gekennzeichnet, daß** die Zwischenstellung des Verschlußkörpers (8), bei welcher der Differentialkolben (3) abhebt, bei 25 - 35 % des Gesamthubs des Verschlußkörpers (8) liegt.

**4.** Ventileinrichtung nach einem der Ansprüche 1 bis 3, **dadurch gekennzeichnet, daß** die Nennweite des durch Verschlußkörper (8) und Entlastungsbohrung (3.1) gebildeten Direktventils ca. 30 - 40 % der Nennweite des Gesamtventils beträgt.

**5.** Ventileinrichtung nach einem der Ansprüche 1 bis 4, **dadurch gekennzeichnet, daß** der dem Servoventil in Reihe geschaltete Strömungswiderstand einen Kv-Wert des Volumendurchflusses von mindestens 7 % des Kv-Wertes des vollgeöffneten Gesamtventils aufweist.

**6.** Ventileinrichtung nach Anspruch 5, **dadurch gekennzeichnet, daß** der Strömungswiderstand einem Kv-Wert des Volumendurchflusses von ca. 38 % des Kv-Wertes des vollgeöffneten Gesamtventils aufweist.

**7.** Ventileinrichtung nach einem der Ansprüche 1 bis 6, **dadurch gekennzeichnet, daß** zur Abdichtung des Druckraums (5) gegen den Steuerraum (6) eine Rollmembran (7) dient, deren Außenrand dichtend mit dem Ventilgehäuse (1) und deren Innenrand dichtend mit dem Differentialkolben (3) verbunden ist und in die der Ventilteller (2) integriert ist.

**8.** Ventileinrichtung nach Anspruch 7, **dadurch gekennzeichnet, daß** die Rollmembran (7) so ausgebildet ist, daß der Ventilteller (2) kraftlos auf dem Ventilsitz (4) aufsitzt.

**9.** Ventileinrichtung nach einem der Ansprüche 1 bis 8, **dadurch gekennzeichnet, daß** der Steuerkanal als mindestens eine außermittig im Differentialkolben (3) angeordnete Steuerbohrung (3.2) ausgebildet ist.

**10.** Ventileinrichtung nach einem der Ansprüche 1 bis 9, **dadurch gekennzeichnet, daß** die Steuerstange (9) gegenüber dem Steuerraum (6) durch einen Faltenbalg (9.1) abgedichtet ist.

**11.** Ventileinrichtung nach einem der Ansprüche 1 bis 9, **dadurch gekennzeichnet, daß** die Steuerstange gegenüber dem Steuerraum durch eine zweite Rollmembran abgedichtet ist.

**12.** Ventileinrichtung nach einem der Ansprüche 1 bis 11, **dadurch gekennzeichnet, daß** an der dem Ventilsitz (4) zugekehrten Seite des Differentialkolbens (3) ein beim Schließen in den Ventilsitz eintauchender Regelkörper (3.3) angeordnet ist, dessen vorgegebene Außenkontur derart ausgebildet ist, daß der Volumendurchfluß dem Hub des Verschlußkörpers (8) proportional ist.

**13.** Ventileinrichtung nach einem der Ansprüche 1 bis 12, **dadurch gekennzeichnet, daß** der Hub des Ventiltellers (2) durch eine Hubbegrenzung auf einen Maximalwert begrenzt ist.

**Claims**

**1.** Valve device with a servo valve which is controllable by an electric motor, and which has a double diameter piston (3) which is arranged displaceably in a valve housing (1) and carries the valve disc (2), a pressure space (5) being arranged on one side of said double diameter piston (3), being connected to the valve inlet, and being connected to the valve outlet (A) via a valve seat (4) opposite the valve disc, and a control space (6) being arranged on the other side of said double diameter piston (3) and being connected via a relief bore (3.1) which is arranged in the double diameter piston to the valve outlet and via a control channel to the pressure space (5), the pressure space (5) being sealed against the control space (6) in the peripheral area of the double diameter piston, and it being possible to seal the relief bore (3.1) on the control space side by a control element, which is joined to a control rod (9) which can be displaced by a motor and is guided sealingly out of the control space, and a flow resistor being connected in series with the servo valve, and the control element being in the form of a seal body (8) which dips into the relief bore (3.1) and has a specified surface (8.1) which tapers in the closing direction, and it being possible to move said seal body (8) from a closed position, in which it closes the relief bore (3.1) sealingly, into an open position, the average cross-section of the relief bore (3.1) being enlarged successively in the intermediate positions between the closed position and the open position, and the surface (8.1) of the seal body (8) being in such a form that at a specified intermediate position of the seal body (8) the double diameter piston (3) with the valve disc (2) rises from the valve seat (4) under the differential pressure of the flowing medium, **characterized in that** the seal body (8) has a specified, convexly curved surface (8.1).

**2.** Valve device according to Claim 1, **characterized in that** the contour of the surface (8.1) of the seal body (8) is in such a form that during its opening movement, at least until the intermediate position in which the double diameter piston (3) rises is reached, the flow rate is proportional to the travel of the seal body (8).

**3.** Valve device according to Claim 1 or 2, **characterized in that** the intermediate position of the seal body (8) at which the double diameter piston (3) rises is at 25 - 35% of the total travel of the seal body (8).

**4.** Valve device according to one of Claims 1 to 3, **characterized in that** the nominal width of the direct valve which is formed by the seal body (8) and relief bore (3.1) is approximately 30 - 40% of the nominal width of the entire valve.

**5.** Valve device according to one of Claims 1 to 4, **characterized in that** the flow resistor which is connected in series with the servo valve has a Kv value of the volume flow rate of at least 7% of the Kv value of the entire fully open valve.

**6.** Valve device according to Claim 5, **characterized in that** the flow resistor has a Kv value of the volume flow rate of approximately 38% of the Kv value of the entire fully open valve.

**7.** Valve device according to one of Claims 1 to 6, **characterized in that** to seal the pressure space (5) against the control space (6), a roll membrane (7), the outer edge of which is joined sealingly to the valve housing (1) and the inner edge of which is joined sealingly to the double diameter piston (3), and which is integrated in the valve disc (2), is used.

**8.** Valve device according to Claim 7, **characterized in that** the roll membrane (7) is in such a form that the valve disc (2) rests on the valve seat (4) without force.

**9.** Valve device according to one of Claims 1 to 8, **characterized in that** the control channel is in the form of at least one control bore (3.2) which is arranged eccentrically in the double diameter piston (3).

**10.** Valve device according to one of Claims 1 to 9, **characterized in that** the control rod (9) is sealed against the control space (6) by expansion bellows (9.1).

**11.** Valve device according to one of Claims 1 to 9, **characterized in that** the control rod is sealed against the control space by a second roll membrane.

**12.** Valve device according to one of Claims 1 to 11, **characterized in that** on the side of the double diameter piston (3) facing the valve seat (4), a control body (3.3) which dips into the valve seat on closing is arranged, and its predetermined outer contour is in such a form that the volume flow rate is proportional to the travel of the seal body (8).

**13.** Valve device according to one of Claims 1 to 12, **characterized in that** the travel of the valve disc (2) is limited to a maximum value by a travel limiter.

**Revendications**

**1.** Dispositif de valve comportant une servo-valve pilotée par un moteur électrique et pourvue d'un piston différentiel (3) agencé mobile en translation dans un boîtier de valve (1) et portant l'opercule de valve (2), piston sur un côté duquel est agencé un compartiment de pression (5) relié à l'entrée de valve et en liaison avec la sortie de valve (A) via un siège de valve (4) opposé à l'opercule de valve, et sur l'autre côté duquel est agencé un compartiment de commande (6) qui est relié à la sortie de valve via un perçage de décharge (3.1) ménagé dans le piston différentiel et relié au compartiment de pression (5) via un canal de commande, dispositif dans lequel le compartiment de pression (5) est étanché par rapport au compartiment de commande (6) dans la zone de bord du piston différentiel, le perçage de décharge (3.1) est susceptible d'être refermé du côté compartiment de commande par un organe de commande qui est relié à une barre de commande (9) mobile en translation par un moteur et menée avec étanchement hors du compartiment de commande, et une résistance hydraulique est branchée en série par rapport à la servo-valve, et l'organe de commande est réalisé sous la forme d'un corps obturateur (8) plongeant dans le perçage de décharge (3.1) et présentant une surface enveloppe (8.1) prédéterminée qui va en se rétrécissant en direction de fermeture, corps qui est mobile depuis une position de fermeture dans laquelle il referme de façon étanche le perçage de décharge jusque dans une position d'ouverture, et dans les positions intermédiaires entre la position de fermeture et la position d'ouverture la section transversale de passage du perçage de décharge (3.1) augmente successivement, et la surface enveloppe (8.1) du corps obturateur (8) est réalisée de telle sorte que pour une position intermédiaire prédéterminée du corps obturateur (8) le piston différentiel (3) se soulève du siège de valve (4) conjointement avec l'opercule de valve (2) sous la pression différentielle du fluide en écoulement, **caractérisé en ce que** le corps obturateur (8) comprend une surface enveloppe prédéterminée (8.1) incurvée de façon convexe.

**2.** Dispositif de valve selon la revendication 1, **caractérisé en ce que** le contour de la surface enveloppe (8.1) du corps obturateur (8) est réalisé de telle sorte que lors de son mouvement d'ouverture au moins jusqu'à atteindre la position intermédiaire dans laquelle le piston différentiel (3) se soulève, le débit est proportionnel à la course du corps obturateur (8).

**3.** Dispositifs de valve selon l'une ou l'autre des revendications 1 et 2, **caractérisé en ce que** la position intermédiaire du corps obturateur (8) dans laquelle le piston différentiel (3) se soulève se trouve vers 25 à 35 % de la course totale du corps obturateur (8).

**4.** Dispositif de valve selon l'une des revendications 1 à 3, **caractérisé en ce que** la largeur nominale de la valve directe formée par le corps obturateur (8) et par le perçage de décharge (3.1) est d'environ 30 à 40 % de la largeur nominale de l'ensemble de la valve.

**5.** Dispositif de valve selon l'une des revendications 1 à 4, **caractérisé en ce que** la résistance hydraulique branchée en série par rapport à la servo-valve présente un coefficient Kv du débit volumique d'au moins 7 % du coefficient Kv de l'ensemble de la valve complètement ouverte.

**6.** Dispositif de valve selon la revendication 5, **caractérisé en ce que** la résistance hydraulique présente un coefficient Kv du débit volumique d'environ 38 % du coefficient Kv de l'ensemble de la valve complètement ouverte.

**7.** Dispositif de valve selon l'une des revendications 1 à 6, **caractérisé en ce que** pour étancher le compartiment de pression (5) par rapport au compartiment de commande (6), il est prévu une membrane déroulante (7) dont le bord extérieur est relié avec étanchement au boîtier de valve (1) et dont le bord intérieur est relié avec étanchement au piston différentiel (3) et dans laquelle est intégré l'opercule de valve (2).

**8.** Dispositif de valve selon la revendication 7, **caractérisé en ce que** la membrane déroulante (7) est réalisée de telle sorte que l'opercule de valve (2) repose sans force sur le siège de valve (4).

**9.** Dispositif de valve selon l'une des revendications 1 à 8, **caractérisé en ce que** le canal de commande est réalisé sous la forme d'au moins un perçage de commande (3.2) ménagé de façon décentrée dans le piston différentiel (3).

**10.** Dispositif de valve selon l'une des revendications 1 à 9, **caractérisé en ce que** la barre de commande (9) est étanchée par un soufflet (9.1) par rapport au compartiment de commande (6).

**11.** Dispositif de valve selon l'une des revendications 1 à 9, **caractérisé en ce que** la barre de commande est étanchée par une seconde membrane déroulante par rapport au compartiment de commande.

**12.** Dispositif de valve selon l'une des revendications 1 à 11, **caractérisé en ce qu'**il est prévu sur le côté du piston différentiel (3) tourné vers le siège de valve (4) un corps de régulation (3.3) qui, lors de la fermeture, plonge dans le siège de valve et dont le contour extérieur prédéterminé est réalisé de telle sorte que le débit volumique est proportionnel à la course du corps obturateur (8).

**13.** Dispositif de valve selon l'une des revendications 1 à 12, **caractérisé en ce que** la course de l'opercule de valve (2) est limitée à une valeur maximale par une limitation de course.

Fig.1A

Fig.1

Fig.2A

Fig.2

Fig.3A

Fig.3

Fig.4A

Fig.4

Fig.8

Fig.5
A-A

Fig.6

Fig.7
B-B

Fig. 9

15

EP 1 431 640 B1

Fig.10